# EUROPEAN PATENT SPECIFICATION

(11) **EP 1 346 632 B1**
(45) Date of publication and mention of the grant of the patent: **07.12.2005**
(21) Application number: 03006353.1
(22) Date of filing: 20.03.2003
(51) Int. Cl.: A01K 1/02, A01K 1/00

(54) **Rear gate for domestic animal pen**
Hecktür für Tierbox
Porte arrière pour case pour un animal

(30) Priority: 22.03.2002 DK 200200081; 22.03.2002 DK 200200440
(43) Date of publication of application: 24.09.2003
(73) Proprietor: EGEBJERG MASKINFABRIK A/S, 4500 Nykobing Sjaelland (DK)
(72) Inventor: Rasmussen, Henrik, 4500 Nykoping Sjaelland (DK)
(74) Representative: Gregersen, Niels Henrik

(56) References cited:
- WO-A-02/34037
- FR-A- 2 793 387
- FR-A- 2 803 983
- GB-A- 2 263 855

## Description

The present invention concerns a rear gate for a pen for domestic animals, preferably sows, and a corresponding pen. The pen has a size so that one of these animals may stay in the pen, where the rear gate is intended to be opened from closed condition by forceful action in rearwards direction on the part of the animal.

The invention will be explained by an example of an embodiment of the invention, where the pen is an eating box/resting box intended for a sow. The invention is, however, quite general and is not limited to this application.

Such a rear gate for pens is known from DK 173957 where the pen has a feed trough at the front end of the pen and a front gate, which via a connecting device is connected with the rear gate so that opening the front gate result in closing the rear gate, and opening the rear gate result in closing of the front gate. The rear gate is hinged horizontally and is positioned over the back of the animal in the open condition.

Such pens are used in stable systems arranged for flocks of loose sows. The feeding of loose sows in a stable occurs so that a flock of sows are staying in a resting area, after which the sows find an empty pen by themselves, where they close the gate behind them by pushing the front gate. The sows may now eat undisturbedly. A central locking system for the pens, which blocks against opening the rear gate, provides for all sows remaining in their pens until feeding has finished, after which the central locking system is disengaged again. The system with the pens ensures that all sows are getting the amount of feed they are in need of. It may be the same amount of feed for all sows, but also individual allocation of feed.

This separation of the sows during feeding is important as the hierarchy in a flock can cause weak sows to be pushed aside by stronger sows, thereby not getting feed enough. Pens of the above described type are also used by the sows for resting without being disturbed by other sows.

In order that the keeper or veterinary has facilitated access to the pen, in a further development of the pen described in the above publication DK 173957 there is provided a rear gate provided with an opening. Such a rear gate is described in International patent application by Rasmussen with number PCT/DKO1/00683 and publication number WO 02/34037. The opening of the rear gate is provided between the supporting side members of the rear gate that extend in direction towards the outer edge of the rear gate, where the opening is open upwards and has a size preventing passage of the animal through the opening but allows passage by a human through the rear gate. The latter is achieved by the opening having a width largely corresponding to a typical boot width so that the person can move his legs through the opening.

When a sow stays in a pen as described in the aforementioned publication DK 173957 or in International patent application WO 02/34037, other loose sows will jump upon the gate with their forelegs and head due to their pronounced desire for playing. At the rear gate, as described in WO 02/34037, the transition from the supporting side members to the aperture is almost funnel-shaped. Unfortunately, this implies that the sows risk sliding down with the neck into the narrowing transition between the side members and the opening and be slowly strangled thereby. There is also the risk that the sow places herself with the forelegs at the other side of the gate and with the forepart of the body right behind the legs slides down into the funnel-shaped opening, also causing the sow's death.

French patent application FR 2 803 983 has solved this problem by providing a rear gate arrangement with two rear gates, one rear gate on each side in the back of the pen. Each gate has a sharp edge towards the centre line of the pen to define an upwards sharply edged opening, which has the advantage in contrast to a funnel-shaped narrowing that a sow jumping upon the gates does not unsuitably slide down with its neck into the opening, but rests on the sharp edges. Thereby the risk of strangling the sow is minimised in the case where the sow jumps on the rear gates. However, normally sows also try to lift the rear gate or gates with its head. In the rear gate arrangement of FR 2 803 983, where the rear gates normally are locked in the closed position such that they cannot be lifted, this may result in the neck of the sow sliding upwardly into the upwardly narrowing opening between the two rear gates an may lead to injury and strangling of the sow. Therefore, this kind of gate arrangement is not safe.

Therefore, it is the purpose of the invention to provide a rear gate for a pen for domestic animals, having an opening for through passage of persons and a locking mechanism when the gate is closed but not having the latter drawback.

This purpose is achieved with a rear gate suited for a pen for domestic animals, preferably sows, which pen has a size so that one of these animals can stay in the pen, where the rear gate is horizontally hinged and is positioned over the animal's back in open condition, where the rear gate is provided with an opening between supporting side members of the rear gate that extend towards the outer edge of the rear gate, where the opening is open upwards and has a size preventing passage of the animal through the opening but allowing passage of a human through the rear gate, where the rear gate has a transition from the sides of the opening to the supporting side members forming a right or acute angle and wherein the angle is sharply edged. Furthermore, the rear gate is peculiar in that it is a single rear gate and that the opening is closed downwards and that the rear gate has a release mechanism for releasing the rear gate from closed condition, where the release mechanism is adapted to allow releasing the gate from closed condition by a rearwards displacement of the rear gate over a length in the rearward direction before a pivoting upwards of the gate.

As the transition from the opening and the side members is sharply edged, as opposed to a funnel-shaped narrowing, the advantage is achieved that a sow jumping upon the gate does not unsuitably slide down into the narrowing and the opening, but, however rests on the sharply edged transition. Thereby the risk of strangling the sow when jumping on the gate is minimised. On the other hand, the opening is closed downwards such that a sow cannot lift its neck into the opening from below and be strangled. The latter is normally only a risk, when the rear gate is locked in the closed position. However, this is a possible situation for the rear gate according to the invention. The locking and release mechanism however are constructed such that the sow in the pen by its rearward movement may release the locking of the gate but not the sow trying to lift it from outside the pen. After being pushed a length rearward, the gate is released and may pivot up by further pushing from the sow. With such a gate according to the invention, the sow in the pen is protected from other sows unsuitably opening the gate. Thus, the rear gate according to the invention takes into account the functional and safety demands for modem pen gates in that
- it allows a person to enter easily into the pen,
- it allows the animal in the pen to open the rear gate but
- prevents an animal from outside the pen to enter the pen when it is closed, and
- the rear gate prevents injury of the animals.

Such a sharply edged transition is e.g. provided by the sides of the opening being attached on the side of the supporting side members, or that the supporting side members are attached on the sides of the opening. If the gate is made of iron pipes and/or iron sections, it is expedient that the transition is provided by welding.

In case that the sides of the opening and the supporting side members are provided by pipes, a transition may be attained by bending these pipes. In that case, the transition is curving with a small bending radius which is less than two times the diameter of the pipe, preferably less that 1.5 times the diameter of the pipe, in order to provide sufficient security for a sow jumping upon the rear gate.

The rear gate is preferably horizontally hinged, but the system with the release mechanism may also be used for vertically hinged rear gates, and for horizontally hinged gates of other type. This is, however, not part of the invention.

For example, such a release mechanism may be provided by an elastically displacing fitting for engaging behind a hook, where the fitting is pre-stressed with an elastic force, where the fitting is arranged for releasing from the hook under sufficient large force action on the gate in a direction which is largely rearwards directed relative to the pen in order to counteract the elastic force. Such an elastic force is e.g. caused by a spring mechanism, but other elastic measures, such as rubber bands or elastomeres of other types, are also usable.

In a specific embodiment, the fitting includes an oblong recess through which a rotatable axle is extending, where the rotatable axle is radially displacing in the oblong recess. Preferably, the fitting includes a spring mechanism that actuates the fitting by force in radial direction against the rotatable axle, where the direction of the force action against rotatable axle is forward directed if the rear gate is in closed condition.

As already described, the pen may be safeguarded against the sow again leaving the pen during or after feeding. This may be achieved by providing the pen with a central locking mechanism. The central locking mechanism may be engaged and disengaged from a central position, e.g. with a handle. When the locking mechanism is engaged, the rear gate cannot be opened by being pushed rearwards. Typically, such a handle is provided in the front part of the pen, which, however, may be a disadvantage if one wants to disengage the locking mechanism from a position behind the pen.

Preferably, this locking mechanism will be included in a central locking apparatus which is connected with a row of pens and designed so that all locking devices for the pens may be engaged or disengaged jointly. This simplification of the locking apparatus means, however, that individual locking of the pens is not possible unless further means are incorporated. Such further means are explained in the following.

In a number of further embodiments, the pen includes a locking mechanism that is designed to block further displacing of the rear gate during engagement. The locking mechanism includes e.g. a movable lock pawl which is designed for, during engagement of the locking mechanism, to be moved into abutment against the fitting in order thereby to prevent that the fitting can be released from the hook. Furthermore, the locking mechanism may include a wire connected with the lock pawl for moving the lock pawl through tension in the wire.

In a specific embodiment, the lock mechanism includes a rocker lock with the lock pawl and a counterweight, where the rocker lock is arranged rotatable about a rotational axis with the counter weight at one side of the axle and the lock pawl at the opposite side of the axle. The wire can e.g. be fastened to the counterweight in order to lift the counterweight from its base by pulling the wire in order thereby to pivot the lock pawl past the fitting. Alternatively, the wire may be fastened directly to the lock pawl.

In order to engage and disengage from central position, there wire is advantageously passed through a pipe along the pen to the central locking apparatus from where the lock pawl may be operated.

In a further development, the system includes a displaceable slide block for locking, where the slide block is designed to slide between a first position and a second position, where the slide lock in the first position is supporting the wire sufficiently so that pulling the wire causes moving of the lock pawl, and where the slide lock (39) in the second position causes slacking of the wire that is sufficient to the end that tensioning the wire from the central locking apparatus does not enable moving the lock pawl to such extent that the fitting can be released from the hook. Thereby is achieved a very simple mechanism for individual locking of the pens.

The invention is further explained below with reference to the drawing wherein:
- Fig. 1: shows a pen for a sow with a rear gate according to the invention,
- Fig. 2: shows a rear gate according to the invention,
- Fig. 3: shows a rear gate according to prior art,
- Fig. 4: shows an alternative embodiment of a rear gate,
- Fig. 5: shows a rear gate with bent pipe,
- Fig. 6: shows possible embodiments of a rear gate,
- Fig. 7: shows the release mechanism in different situations,
- Fig. 8: shows an embodiment of a spring mechanism,
- Fig. 9: shows a second embodiment of a spring mechanism,
- Fig. 10: shows a locking mechanism for a rear gate,
- Fig. 11: shows a turning device for the locking mechanism,
- Fig. 12: shows the locking mechanism with displaced slide block, and
- Fig. 13: shows the locking mechanism in a second perspective view.

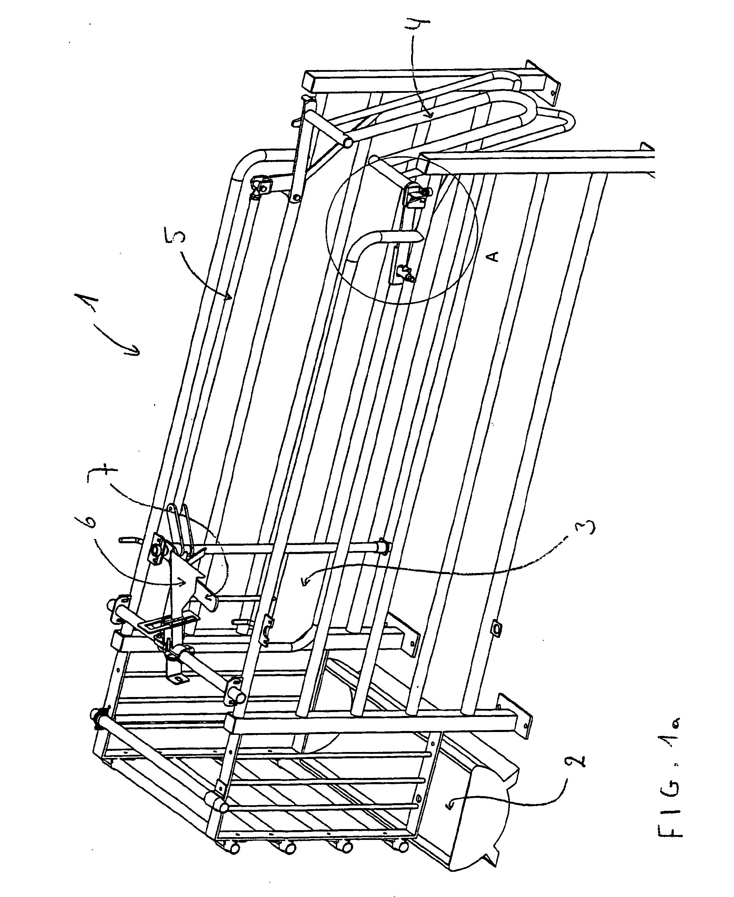

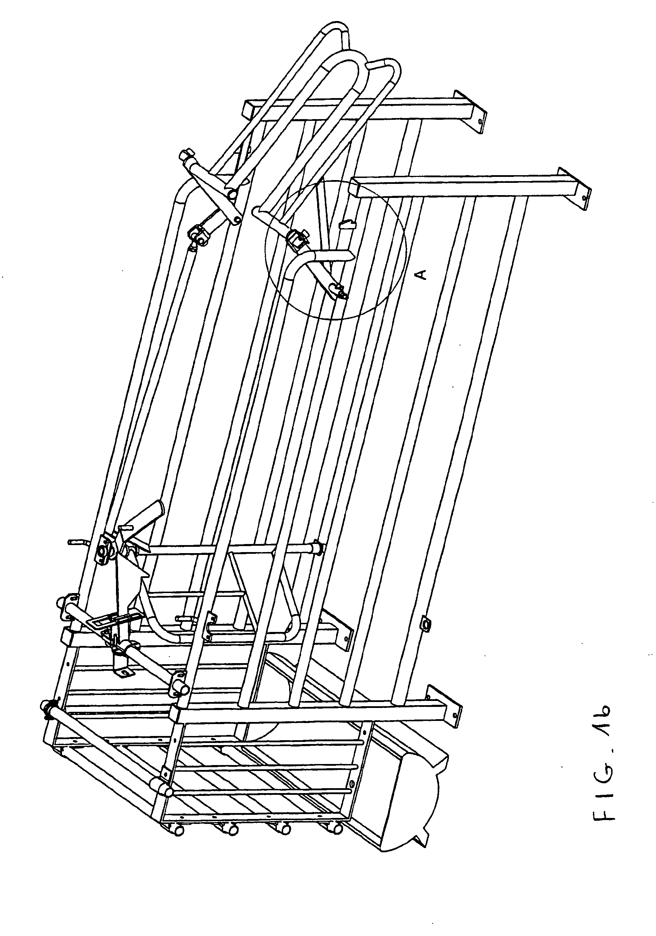

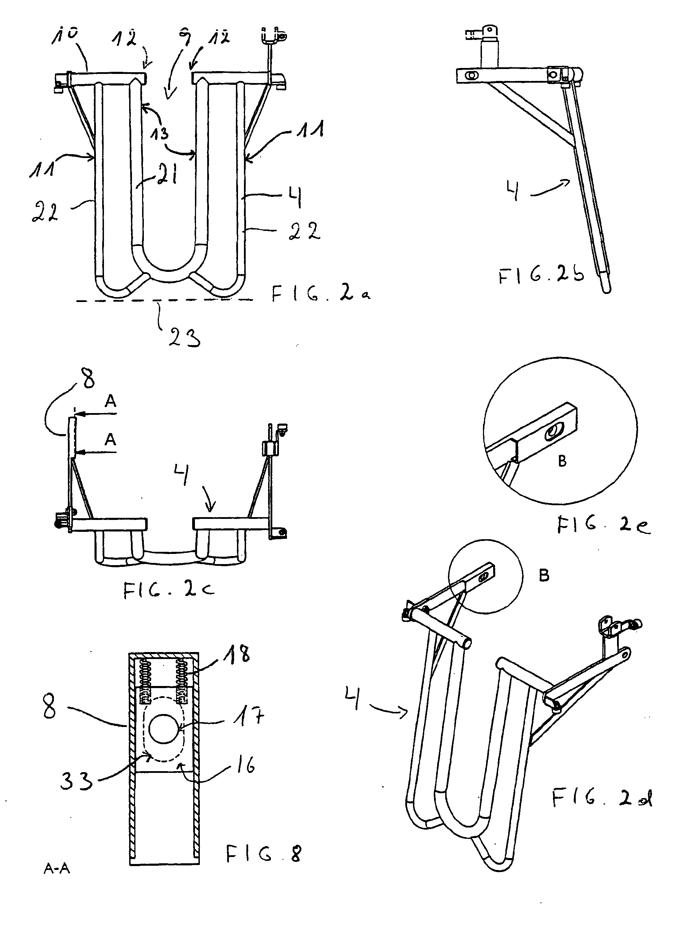

On Fig. 1a is shown a pen 1 in perspective view, where the pen 1 has a feeding trough 2 in the front part of the pen 1, a front gate 3 and a rear gate 4. The rear gate 4 is connected with the front gate 3 via a connecting device 5 so that opening the front gate 3 causes closing of the rear gate 4, and opening the rear gate 4 causes closing of the front gate 3. A sow walking into the pen 1 may close the pen 1 by pushing the front gate 3 forward from closed to open condition, whereby the sow is provided access to the trough and whereby the rear gate 4 closes for access to other sows in the pen 1. In order to ensure the pen 1 against the sow again leaving the pen 1 during feeding, this is provided with a central locking mechanism that includes a lock hook 6 for engagement with a horizontal rod 7. The central locking mechanism may be engaged or disengaged from a central position, e.g. with a handle (not shown), or by means of a central locking apparatus.

The rear gate is hinged 8, 8' horizontally and in open condition positioned over the back of the sow. The rear gate is provided with an opening 9 between the supporting side members 10 of the rear gate that extend in direction towards the outer edge 11 of the rear gate 4.

The rear gate 4 is shown as a system of pipes and profiles. However, it is possible within the scope of the invention to design the rear gate 4 in other ways, e.g. with plates.

The rear gate 4 is shown in greater detail on Fig. 2. The opening 9 is open upwards and has a size preventing passage of the sow through the opening, but allowing passage of a human through the rear gate 4. The rear gate 4 is also peculiar in that the transition 12 from sides 13 of the opening 9 to the supporting side member 10 form a right or acute angle, and that the angle is sharply edged.

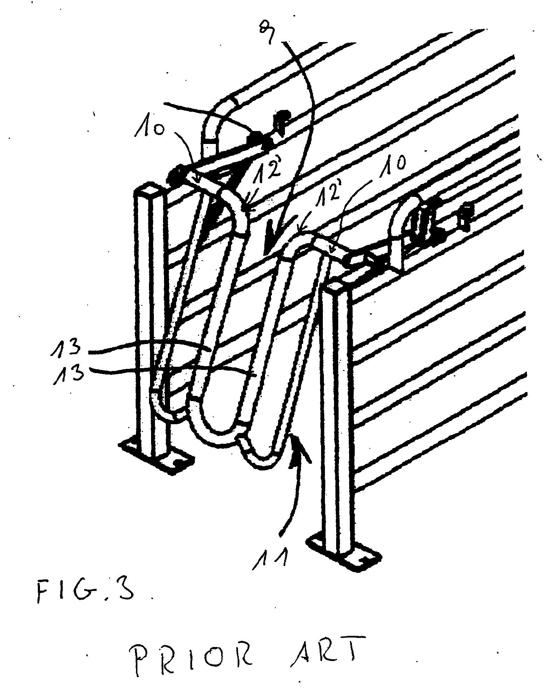

A rear gate according to prior art is shown on Fig. 3. It may be observed, despite the similarities between this rear gate and a rear gate according to the invention, that the transition 12' from sides 13 of opening 9 to supporting side members 10 are evenly curved with a rather large bending radius so that the inlet to the opening 9 is almost funnel-shaped. This may cause that a sow, which has jumped upon the rear gate and is resting with the neck upon the rear gate, is sliding more and more down into the opening 9 during its movement, which may result in strangling of the sow.

As the transition 12 from the opening 9 and the side members 10 is sharply edged at a rear gate according to the invention as shown on Fig. 2, as opposed to the funnel-shaped narrowing from Fig. 3, is achieved the advantage that a sow jumping upon the gate 4 does not unsuitably slide down into the narrowing and the opening 9, but on the contrary is resting on the sharply edged transition 12. Thereby the risk of strangling the sow is minimised.

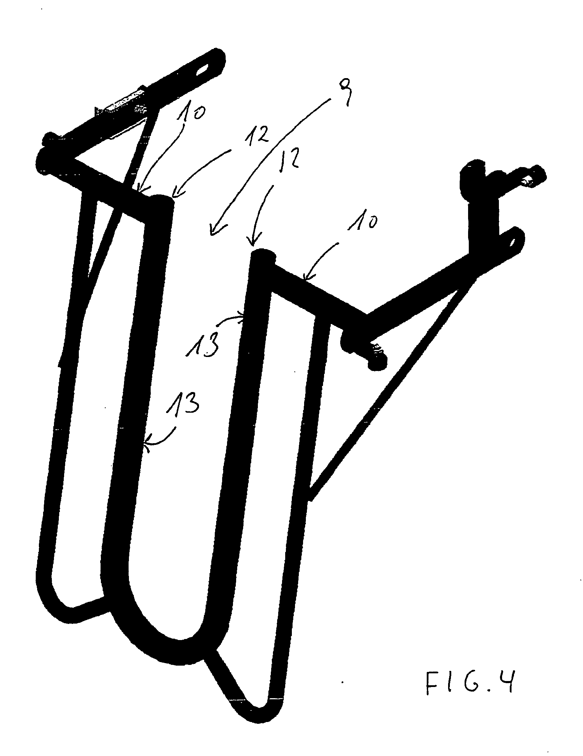

Such a transition 12 is e.g. provided by the sides 13 of the opening 9 being attached at the side of the supporting side members 10, which is shown on Fig. 2. Alternatively, the transition 12 may be provided in that the supporting side members 10 are attached on the sides 13 of the opening 9, which is illustrated on Fig. 4. If the gate 4 is made of iron pipes and/or iron sections, it is expedient that the transition 12 is provided by welding as shown on the Figures.

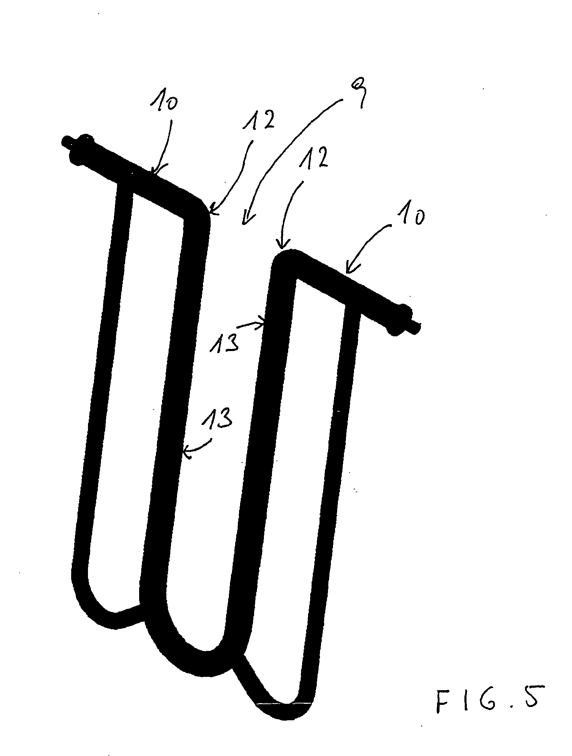

In case that the sides 13 of the opening 9 and the supporting side members 10 are provided by pipes, one may achieve a transition 12 by bending these pipes. This is shown on Fig. 5. In that case it is suitable that the transition 12 is curving with a small radius of curvature which is less than twice the diameter of the pipe, preferably less than 1.5 times the pipe diameter, in order to provide sufficient safety for a sown jumping upon the rear gate 4.

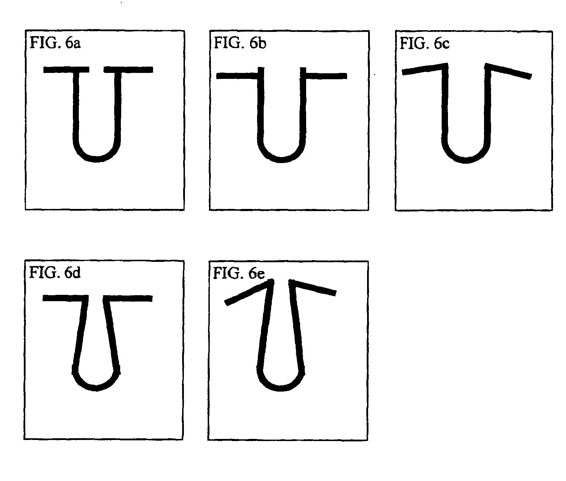

Within the scope of the invention, there are various possibilities for designing the transition 12 between the sides 13 of the opening and the supporting side members 10. On Fig. 6 is illustrated a number of shapes where Fig. 6a corresponds to the rear gate on Fig. 2, Fig. 6b corresponds to the rear gate on Fig. 4 and Figs. 6c-e are further examples of the transition 12.

As shown on Fig. 2A, the rear gate 4 includes a grating arrangement with a centre section 21 and side sections 22, where the side sections 22 are extending farther down towards the pen bottom 23 than the centre section. Typically, the lower edge of the side sections will be flush with lowermost pipe in the side of the pen, e.g. 16 cm above the bottom of the pen. By the centre section 21 not extending so far down as the side sections 22 is ensured that the centre section 21 is above the coccyx of the lying sow. Thereby is prevented that the centre section 21 rubs against the coccyx of the lying sow, and particularly against the underside of the tail which is sensitive to the sow. On the other hand, the side sections 22 ensure that the sow is not sliding down in under the rear gate 4 when the sow is lying down.

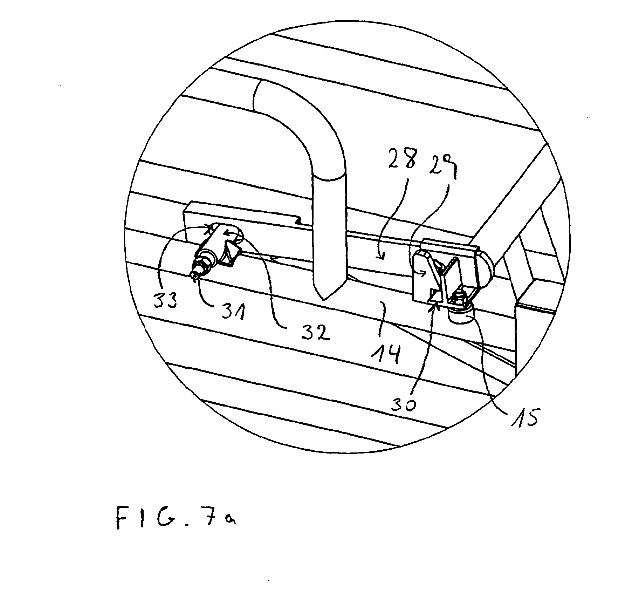

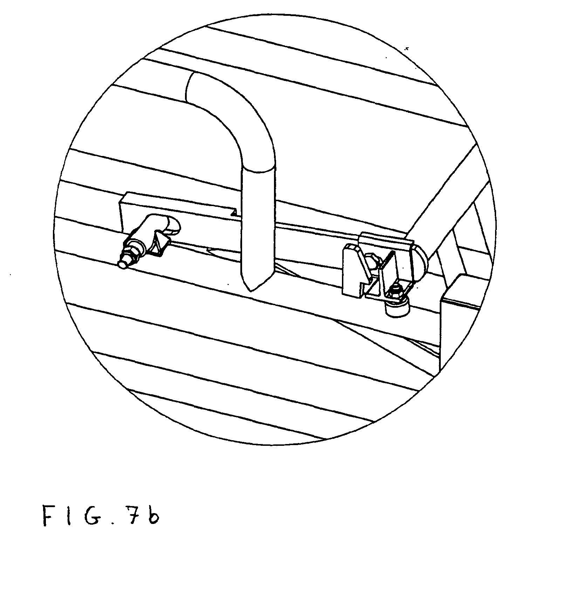

In order to prevent inadvertent opening of the pen 1, the rear gate 4 includes a release mechanism that is released when and only when the rear gate 4 is pushed in a direction which is largely rearwards directed relative to the pen 1. The release mechanism is shown as detail A in enlarged version on Fig. 7a.

The release mechanism includes an elastically displacing fitting 28 for engaging behind a hook 29. The transverse engaging part 30 of the fitting 28 on the shown Fig. 7a is engaging the hook 29. The fitting 28 is rotating about a rotatable axle 31 that extend through a bushing 32 and through an oblong recess 33. The bushing 32 is fastened to a pipe 14 of the sidewall on the pen 1, e.g. by welding. Due to the oblong recess 33, the fitting 28 may be displaced relative to the rotatable axle 31. The fitting 28 is pre-stressed with an elastic force in direction against the axle 31 and is therefore kept in place under the hook 29.

The fitting 28 is fastened to the rear gate 4. If the rear gate 4 is pushed rearwards, the fitting 28 will thus also be displaced rearwards if the rearwards directed force is greater than the force of the forwards directed pre-stressing, when the gate 4 is closed. Thereby, the transverse engagement part 30 of the fitting 28 is released from the hook 29, which is shown on Fig. 7b. The fitting 8 is then displaced so much in rearwards direction that the axle 31 is positioned rearmost in the oblong recess 33.

As the fitting 28 of the rear gate 4 in this stage is released from engaging the hook 29, the rear gate 4 may now be lifted up, which is shown in Fig. 1b. This is the case if the sow is pushing the rear gate 4 farther rearwards. The detail A from Fig. 1b is shown enlarged on Fig. 7c.

The fitting 28 may advantageously be provided with a rubber disc 15 that rests on a pipe 14 of the sidewall when the rear gate 4 is closed.

On Fig. 2, the rear gate 4 is shown in greater detail seen from behind 4 on Fig. 2a, from the side on Fig. 2b, and from above on Fig. 2c, in closed condition and in perspective view on Fig. 2d, where the detail B is shown in enlarged condition on Fig. 2e.

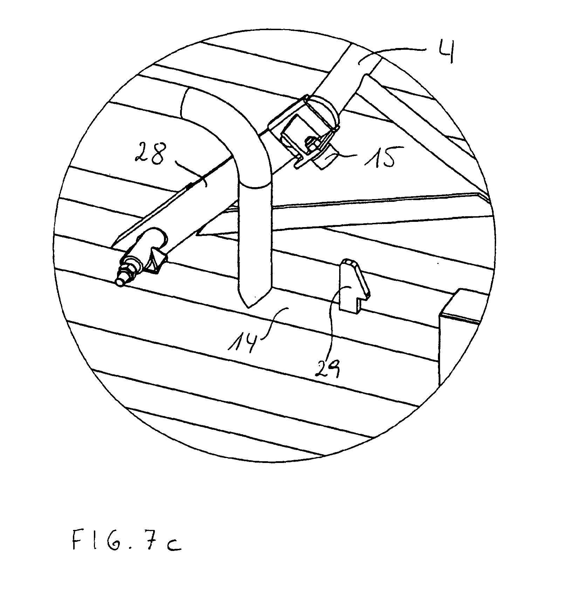

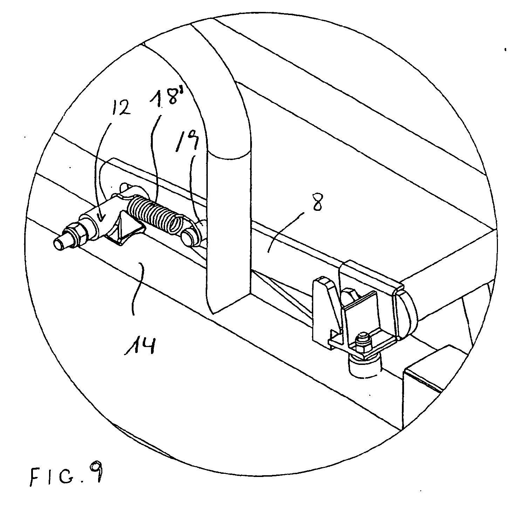

An embodiment of the fitting 28 is shown on Fig. 8 in sectional view A-A. The fitting includes in this case the spring mechanism that is consisting of a displaceable plate 16 with a central hole 17 through which the rotatable axle 31 (not shown on Fig. 8) is extending. Furthermore, the oblong recess 33 is outlined with broken line. The displaceable plate is spring loaded with springs 18 so that moving the plate 16 from its equilibrium position results in an oppositely directed spring force. In practice, the equilibrium position will be arranged so that it is close to the rear part of the oblong recess 33, which is also indicated on Fig. 7c. In this way, the fitting 28 is pre-stressed when the rotatable axle 31 is at the centre of the oblong recess 33.

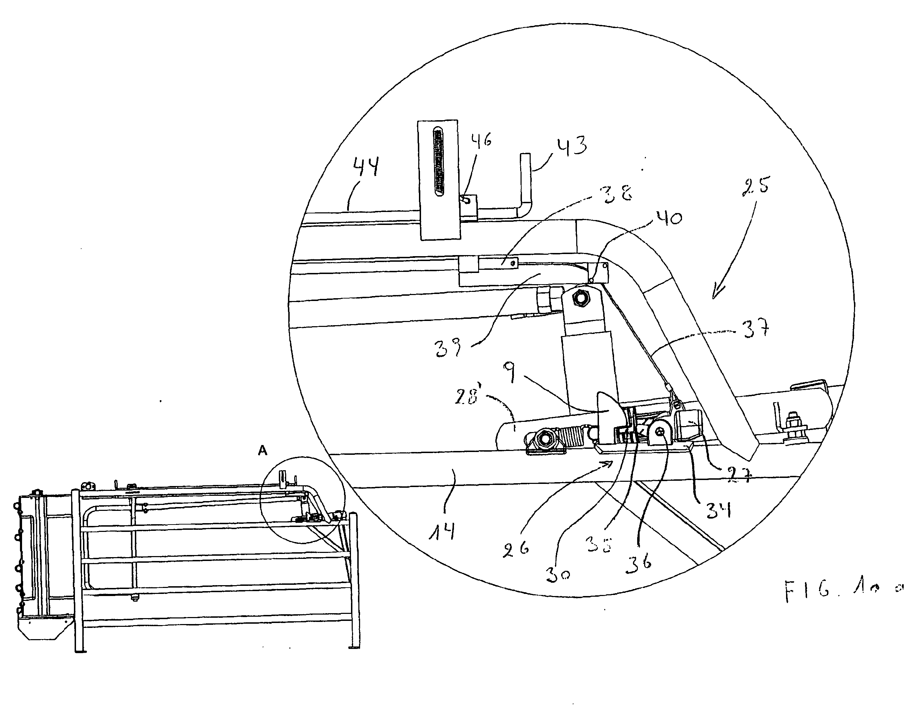

A second embodiment for pre-stressing the fitting 28' against the rotatable axle 31' is shown on Fig. 9. In this case, a spring 18' is provided, with one end connected to the bushing 32 and thereby indirectly to a pipe 14 of the sidewall of the pen 1 and with the second end to a projection 19 of the fitting 28.

As already described in connection with Fig. 1, the pen 1 may be secured against the sow leaving the pen 1 during feeding. This may be achieved by providing the pen with a central locking mechanism, e.g. with a lock hook 6 for engaging a horizontal rod 7. The central lock mechanism may be engaged and disengaged from a central position, e.g. with a handle. When the lock mechanism is engaged, the rear gate cannot be opened by being pushed rearwards. Typically, such a handle is provided in the front part of the pen 1, which can be a disadvantage, however, if one wants to disengage the locking mechanism from a place behind the pen. The lock hook furthermore implies a hazard for the persons staying in the pen as they risk stumbling into the lock hook 6, or to be pressed into the lock hook 6 by the sow, which can have fatal consequences for the person in question.

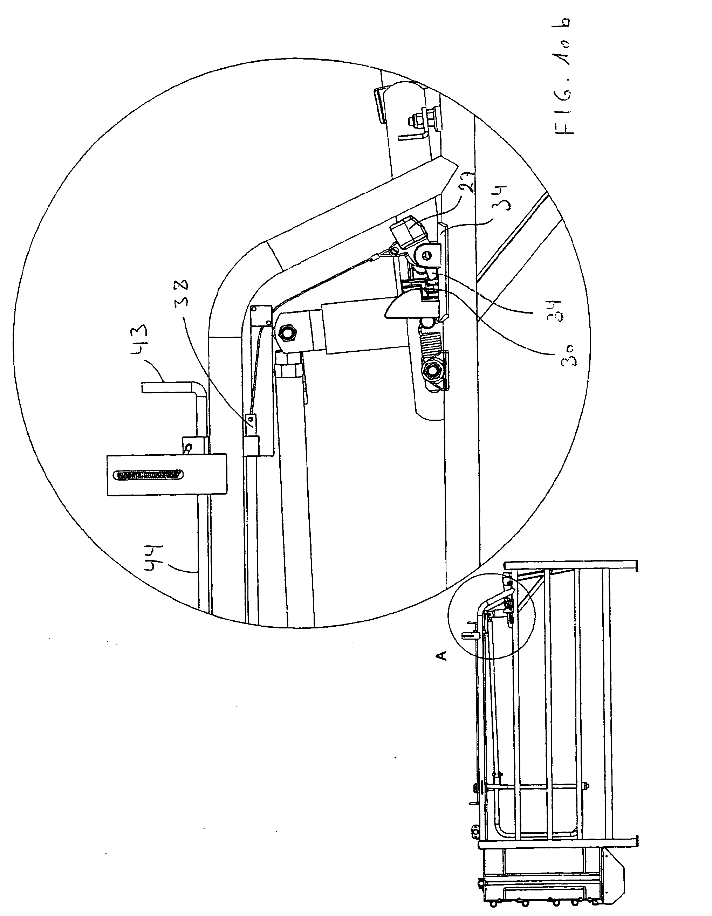

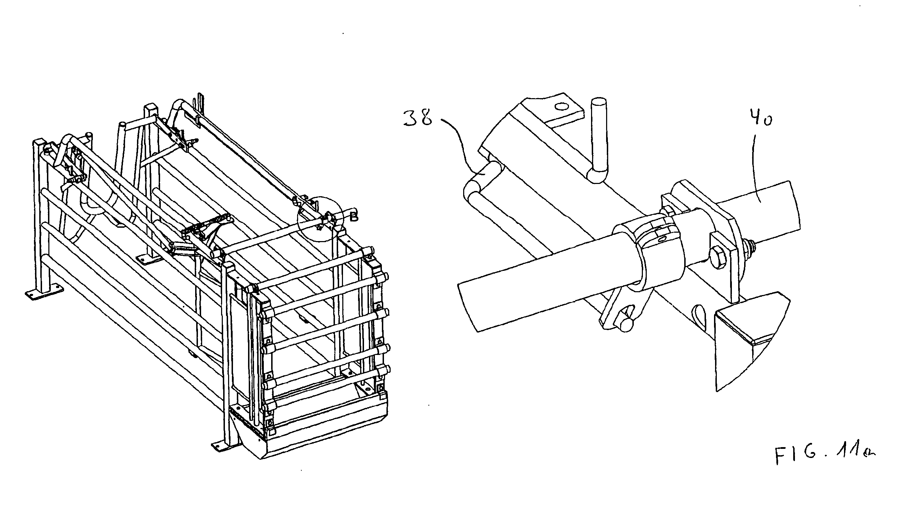

Advantageously, the rear gate is provided with an alternative locking device 25, where the principle of a release mechanism as described in connection with Fig. 7 is supplemented with a system as explained in the following with reference to Fig. 10. The locking device 25 includes a rocker lock 26 that is locking against rearwards displacement of the rear gate, if a counterweight 27 of the rocker lock 26 is resting on the base 34, which is shown on Fig. 10a. The locking is effected by a locking pawl 35 that is provided in extension of the counterweight 27 and in the shown situation is blocking against the transverse engagement part 30' of the fitting 28' being released from the hook 9. It is noted that in this embodiment, the transverse engagement part 30' of the fitting 28' is changed compared with the embodiment shown on Figs. 7 and 9.

If the rocker lock 26 is tilted about a rocker axle 36 so that the counterweight 27 is lifted sufficiently free from the base 34, as shown on Fig. 10b, the lock pawl 35 will pivot past the transverse engagement part 30' of the fitting 28', whereby displacement of the rear gate 4 is possible. A rocker lock 26 of this type is a simple means that is efficient and allow that a lock hook 6 as shown on Fig. 1 may be omitted, whereby the previously mentioned hazard associated therewith is avoided.

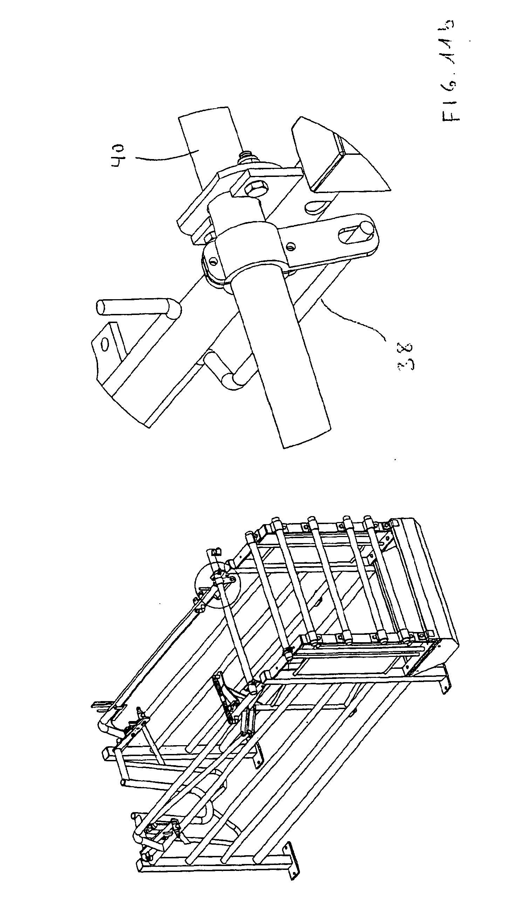

A device for rocking the rocker lock may be designed in different ways. A preferred example is shown on Fig. 10a. The counterweight 27 is connected with a wire 37 that is fastened to a rod 38 which is connected to a turning device 41, as shown on Fig. 11, which is part of a central locking apparatus (not shown). From here, the rocker lock 25 can be engaged by means of a rearwards displacement of the rod 38, as shown on Fig. 11a, and be disengaged by a forward displacement of the rod 38, as shown on Fig. 11b, from a central position, e.g. with a handle (not shown). If the rod 38 is displaced in direction against the front part of the pen, as indicated on Fig. 10b, the wire 37 is tensioned in its course over a cross-pin 41, whereby the counterweight 27 is lifted and the lock pawl 34 is pivoted past the transverse engagement part 30' of the fitting 28'.

The central locking apparatus with the turning device 31 is typically connected at corresponding rods 38 and wires 37 to corresponding locks 25 in other pens 1. Identical locking devices 25 of all the pens may thus be engaged or disengaged form this central apparatus. Preferably, this locking apparatus 40 will be designed so that all locking devices for the pens can be engaged or disengaged jointly. This simplification of the locking apparatus, however, means that individual locking of the pens is not possible, unless further means are incorporated. Such further means are explained in the following.

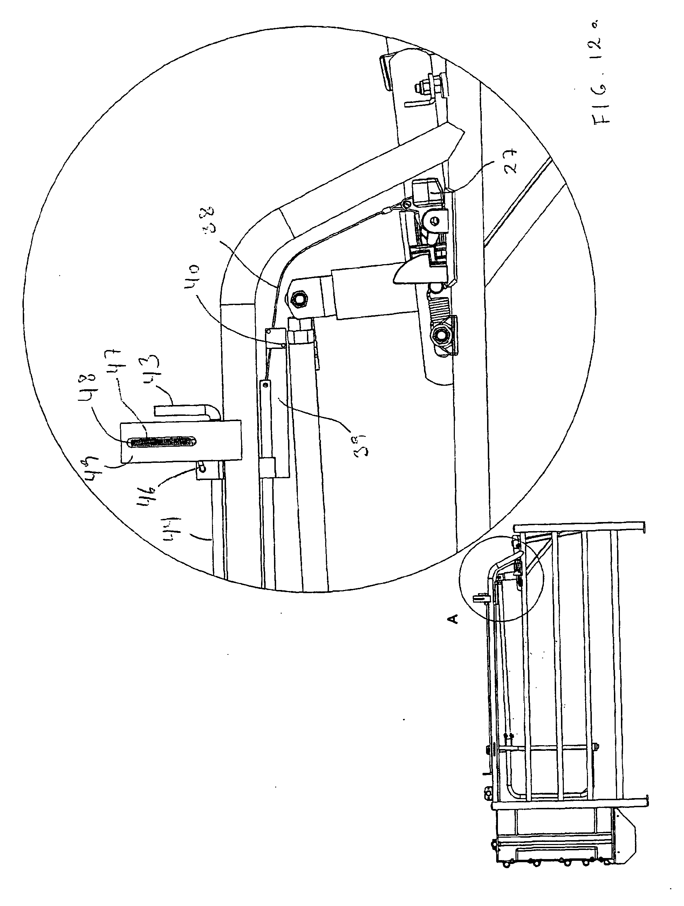

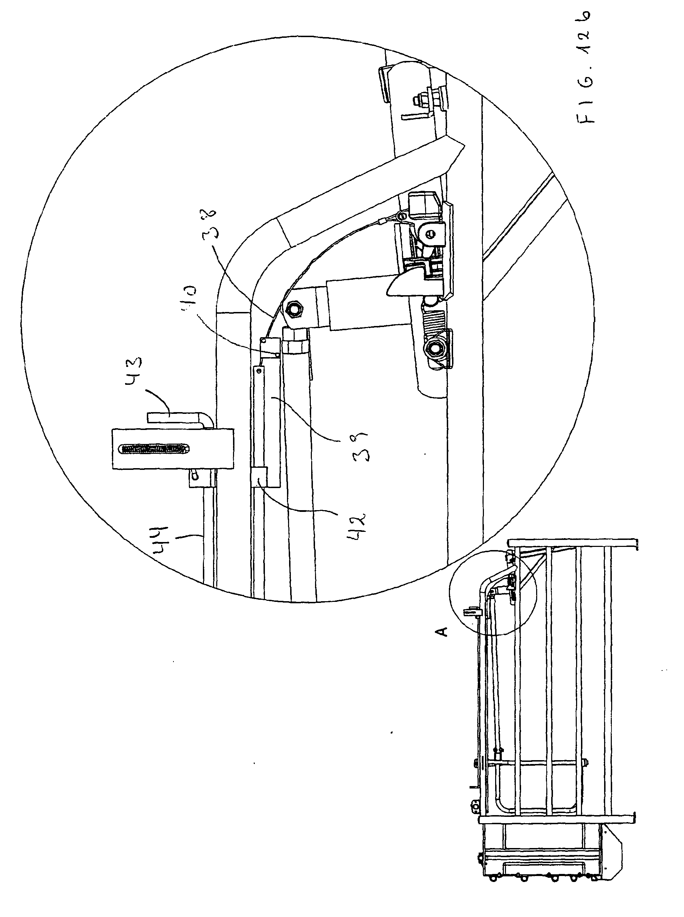

These further means include a slide block 39 that supports the wire 37 by means of the cross-pin 40 between the rod 38 and the counterweight 27 of the rocker lock 26. The slide block 39 is designed to slide between a first position as shown on Fig. 10a and a second position as shown on Fig. 12a. In the first position, which is shown on Fig. 10a, the cross-pin 40 of the slide block 39 will support the wire 38 sufficiently in order that tensioning the wire 37 from the forwards displaced rod 38 as shown on Fig. 10b provides lifting the counterweight 27 off the base 34. In the second position of the slide block 39, as shown on Fig. 12b, the wire 37 is not supported by the cross-pin 40, which causes slackening of the wire 37. The displacement of the slide block 39 is adapted for this slacking being sufficient to the effect that slackening the wire 37 from the rod 38 does not enable lifting the counterweight 27 so much off the base 34 that displacing the rear gate rearwards is possible.

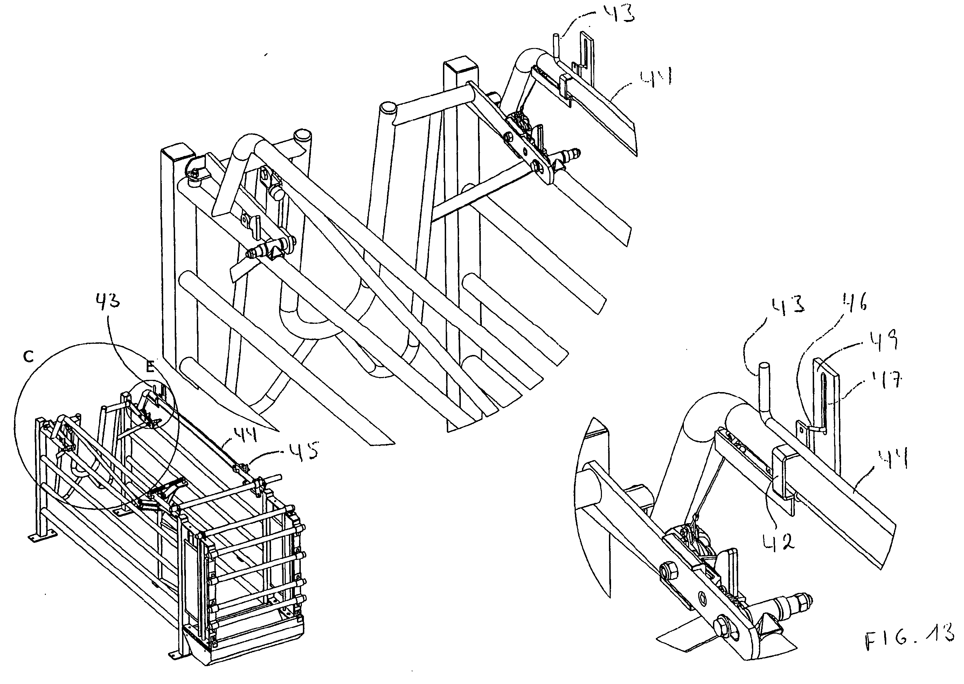

As shown on Fig. 13, the slide block 39 is connected with a fitting 42 which is connected to a rear handle 43, which via a connecting rod 44 is connected to a front handle 45. The fitting 42 is accommodated in a recess 47 of a side plate 49 by means of a z-shaped angle 46, the side plate 49 furthermore containing a spring 48 which is illustrated in perspective view in Fig. 13 and from the side in Fig. 12a. By displacing the connecting rod 44 with the two handles 34,45, the z-shaped angle will change its position between the condition as illustrated on Fig. 10a to a condition as shown on Fig. 12a. While passing from one condition to the other, the spring 48 will be compressed and then extended again. During the passage, the force from the spring on the z-shaped angle will be transmitted to the connecting rod 44 so that a manual displacement of the latter usually will result in that the rod preferably assumes one of the two end positions that are indicated in Fig. 10a and Fig. 12a, respectively.

In practice, this means that by simple means there is provided a reliable and cheap solution for individual locking of the pens. These means can be used for rear gates designed in other ways than described above, e.g. without the shown opening 9 or vertically hinged, which however is not part of the invention. Such individual locking can e.g. be performed from the rear part of the pen by displacing the slide block 39 manually, e.g. in connection with a veterinarian attending the animal in the pen. By this slide block 39 being connected by the connecting rod 44 to a handle 45 in the front part of the pen for keeping the sow in the pen, the slide block 39 may also be displaced from there, e.g. if the farmer wants to engage the locking of the pen for keeping the sow in the pen for a longer time without any danger of the pen being opened by other loose sows.

It is to be noted that the shown rocker lock may also be substituted by a lock designed as a toggle joint. Furthermore, the wire can be fastened on the lock pawl instead of the counterweight.

## Claims

1. Rear gate suited for a pen (1) for domestic animals, preferably sows, the pen having a size so that one of these animals may stay in the pen, where the rear gate (4) is horizontally hinged and is positioned over the animal's back in open condition, where the rear gate (4) is provided with an opening (9) between supporting side members (10) of the rear gate that extend towards the outer edge (11) of the rear gate, where the opening is open upwards and has a size preventing passage of the animal through the opening but allowing passage of a human through the rear gate, wherein the transition (12) from the sides (13) of the opening to the supporting side members (10) form a right or acute angle, and that the angle is sharply edged, **characterised in that** a the rear gate is a single rear gate (4) and that the opening (9) is closed downwards and that the rear gate (4) has a release mechanism (29, 30, 31, 32, 33) for releasing the rear gate (4) from closed condition, where the release mechanism is adapted to allow releasing the gate from closed condition by a rearwards displacement of the rear gate over a length in the rearward direction before a pivoting upwards of the gate.

2. Rear gate according to claim 1, wherein the rear (4) includes a grating arrangement with a centre section (21) and a side section (22) on either side of the centre section (22).

3. Rear gate according to claim 1, wherein the rear gate (4) includes a grating arrangement with a centre section (21) and side sections (22), where the side sections 22 are extending farther towards the bottom (23) of the pen than the centre section (21) when the rear gate (4) is closed.

4. Rear gate according to any preceding claim, wherein the transition (12) is provided by the sides (13) of the opening (9) being attached at the side of the supporting side members (10), or that the supporting side members (10) are attached on the sides (13) of the opening.

5. Rear gate according to claim 4, wherein the gate (4) is made of iron pipes and/or iron sections and wherein the transition (12) is provided by welding.

6. Rear gate according to any one of the claims 1-3, wherein the sides (13) of the opening (9) and the supporting side members (10) are provided by pipes, and that the transition (12) is curved with a radius of curvature which is less than two times the diameter of the pipe, preferably less that 1.5 times the diameter of the pipe.

7. Rear gate according to any preceding claim, wherein the gate (4) includes an elastically displacing fitting (28) for engaging behind a hook (29), where the fitting (28) is pre-stressed with an elastic force provided by elastic means, where the fitting is arranged for releasing from the hook under sufficient large force action on the gate in a direction which is largely rearwards directed relative to the pen (1) in order to counteract the elastic force.

8. Rear gate according to claim 7, wherein the elastic means is a spring mechanism.

9. Rear gate according to claim 8, wherein the fitting (28) includes an oblong recess (33) through which a rotatable axle (31) is extending, where the rotatable axle is radially displacing in the oblong recess (33).

10. Rear gate according to claim 9, wherein the fitting (28) includes a spring mechanism that actuates the fitting by force in radial direction against the rotatable axle (31), where the direction of the force action against rotatable axle is forward directed if the rear gate (4) is in closed condition.

11. Pen for domestic animals with a rear gate according to any one of claims 1-10, wherein the pen is of the type with a feed trough (2) at the front end of the pen, a front gate (3) which via a connecting device (5) is connected with the rear gate (4) so that opening the front gate implies closing the rear gate and opening the rear gate implies closing the front gate.

12. Pen for domestic animals according to claim 11, wherein the pen (1) includes a locking mechanism with means that during engagement are blocking against displacement of the rear gate.

13. Pen for domestic animals according to claim 12, wherein the gate (4) includes an elastically displacing fitting (28) for engaging behind a hook (29), where the fitting (28) is pre-stressed with an elastic force provided by elastic means, where the fitting is arranged for releasing from the hook under sufficient large force action on the gate in a direction which is largely rearwards directed relative to the pen (1) in order to counteract the elastic force, wherein the locking mechanism includes a movable locking pawl (35) which is designed for, during engagement of the locking mechanism, to be moved in abutment against the fitting (28) in order to prevent that the fitting (28) can be released from the hook (29).

14. Pen for domestic animals according to claim 13, where the locking mechanism includes a wire (37) connected with the lock pawl (35) for enabling moving the lock pawl (35) through pulling the wire (37).

15. Pen for domestic animals according to claim 14, where the locking mechanism includes a rocker lock (25) with the lock pawl (35) and a counterweight (27), where the rocker lock is arranged rotatable about a rotational axis (36) with the counterweight at one side of the axis (36) and the lock pawl at the opposite side of the axis.

16. Pen for domestic animals according to claim 15, where the wire (37) is fastened to the counterweight (27) in order to lift the counterweight off the base (34) by pulling the wire in order thereby to pivot the lock pawl (35) past the fitting (28).

17. Pen according to claim 14, 15 or 16, where the wire (37) is passed through a pipe (38) along the pen to a central locking apparatus from where the rocker lock (25) can be engaged and disengaged from a central position.

18. Pen according to any of claims 14-17, wherein a displaceable slide block (39) for locking is provided, where the slide block (39) is designed to slide between a first position and a second position, where the slide lock (39) in the first position is supporting the wire sufficiently so that pulling the wire (37) causes moving of the lock pawl (35), and where the slide lock (39) in the second position causes slacking of the wire that is sufficient to the end that tensioning the wire from the central locking apparatus does not enable moving the lock pawl to such extent that the fitting (28) can be released from the hook (29).

## Patentansprüche

1. Hecktür für einen Käfig (1) für Haustiere, vorzugsweise für Säue, wobei der Käfig eine Größe hat, derart, dass sich eines dieser Tiere in dem Käfig aufhalten kann, wobei die Hecktür (4) horizontal angelenkt und in einem offenen Zustand über dem Rücken des Tiers positioniert ist, wobei die Hecktür (4) mit einer Öffnung (9) zwischen unterstützenden Seitenelementen (10) der Hecktür, die sich zur Außenkante (11) der Hecktür erstrecken, versehen ist, wobei die Öffnung nach oben offen ist und eine Größe besitzt, die den Durchgang des Tiers durch die Öffnung verhindert, jedoch den Durchgang eines Menschen durch die Hecktür zulässt, wobei der Übergang (12) von den Seiten (13) der Öffnung zu den unterstützenden Seitenelementen (10) einen rechten oder spitzen Winkel bildet, wobei die Ecke scharfkantig ist, **dadurch gekennzeichnet, dass** die Hecktür eine einzige Hecktür (4) ist und dass die Öffnung (9) nach unten geschlossen ist und dass die Hecktür (4) einen Lösemechanismus (29, 30, 31, 32, 33) zum Freigeben der Hecktür (4) aus dem geschlossenen Zustand besitzt, wobei der Lösemechanismus die Freigabe der Tür aus dem geschlossenen Zustand durch eine Verlagerung der Hecktür nach hinten über eine Strecke in Rückwärtsrichtung vor dem Schwenken der Tür nach oben zulassen kann.

2. Hecktür nach Anspruch 1, wobei die Hecktür eine Gitteranordnung mit einem Mittelabschnitt (21) und einem Seitenabschnitt (22) auf jeder Seite des Mittelabschnitts (22) aufweist.

3. Hecktür nach Anspruch 1, wobei die Hecktür (4) eine Gitteranordnung mit einem Mittelabschnitt (21) und Seitenabschnitten (22) aufweist, wobei sich die Seitenabschnitte (22) weiter als der Mittelabschnitt (21) zum Boden (23) des Käfigs erstrecken, wenn die Hecktür (4) geschlossen ist.

4. Hecktür nach einem vorhergehenden Anspruch, wobei der Übergang (12) geschaffen ist durch die Befestigung der Seiten (13) der Öffnung (9) an der Seite der unterstützenden Seitenetemente (10) oder durch die Befestigung der unterstützenden Seitenelemente (10) an den Seiten (13) der Öffnung.

5. Hecktür nach Anspruch 4, wobei die Tür (4) aus Eisenrohren und/oder Eisenabschnitten gebildet ist und wobei der Übergang (12) durch Schweißen geschaffen ist.

6. Hecktür nach einem der Ansprüche 1-3, bei der die Seiten (13) der Öffnung (9) und die unterstützenden Seitenelemente (10) durch Rohre geschaffen sind, wobei der Übergang (12) gekrümmt ist und der Krümmungsradius kleiner als der doppelte Durchmesser des Rohrs, vorzugsweise kleiner als der 1,5-fache Durchmesser des Rohrs ist.

7. Hecktür nach einem vorhergehenden Anspruch, wobei die Tür (4) einen elastisch verlagerbaren Beschlag (28) für einen Eingriff hinter einem Haken (29) aufweist, wobei der Beschlag (28) durch eine durch elastische Mittel erzeugte elastische Kraft vorbelastet ist, wobei der Beschlag so beschaffen ist, dass er unter einer ausreichend großen Kraftwirkung auf die Tür in einer Richtung, die in Bezug auf den Käfig (1) im Wesentlichen nach hinten gerichtet ist, um der elastischen Kraft entgegen zu wirken, von dem Haken freigegeben wird.

8. Hecktür nach Anspruch 7, bei der die elastischen Mittel ein Federmechanismus sind.

9. Hecktür nach Anspruch 8, bei der der Beschlag (28) eine längliche Aussparung (33) aufweist, durch die eine drehbare Welle (31) verläuft, die sich in der länglichen Aussparung (33) radial verlagert.

10. Hecktür nach Anspruch 9, bei der der Beschlag (28) einen Federmechanismus aufweist, der den Beschlag zwangsläufig in radialer Richtung entgegen der drehbaren Welle (31) betätigt, wobei die Richtung der Kraftwirkung entgegen der drehbaren Welle nach vorn weist, wenn sich die Hecktür (4) in geschlossenem Zustand befindet.

11. Käfig für Haustiere mit einer Hecktür nach einem der Ansprüche 1-10, wobei der Käfig von dem Typ ist, der am vorderen Ende des Käfigs einen Futtertrog (2) und eine Fronttür (3) aufweist, die über eine Verbindungsvorrichtung (5) mit der Hecktür (4) verbunden ist, so dass ein Öffnen der Fronttür ein Schließen der Hecktür hervorruft und ein Öffnen der Hecktür ein Schließen der Fronttür hervorruft.

12. Käfig für Haustiere nach Anspruch 11, wobei der Käfig (1) einen Verriegelungsmechanismus mit Mitteln, die während des Eingriffs eine Verlagerung der Hecktür blockieren, aufweist.

13. Käfig für Haustiere nach Anspruch 12, bei dem die Tür (4) einen elastisch verlagerbaren Beschlag (21) für einen Eingriff hinter einem Haken (29) aufweist, wobei der Beschlag (28) durch eine durch elastische Mittel erzeugte elastische Kraft vorbelastet ist, wobei der Beschlag so beschaffen ist, dass er unter einer ausreichend großen Kraftwirkung auf die Tür in einer Richtung, die in Bezug auf den Käfig (1) im Wesentlichen nach hinten gerichtet ist, um der elastischen Kraft entgegen zu wirken, von dem Haken freigegeben wird, wobei der Verriegelungsmechanismus eine bewegliche Verriegelungsklaue (35) aufweist, die so beschaffen ist, dass sie während des Eingriffs des Verriegelungsmechanismus in einen Anschlag an dem Beschlag (28) bewegt wird, um zu verhindern, dass der Beschlag (28) von dem Haken (29) freigegeben wird.

14. Käfig für Haustiere nach Anspruch 13, wobei der Verriegelungsmechanismus ein Seil (37) aufweist, das mit der Verriegelungsklaue (35) verbunden ist, um eine Bewegung der Verriegelungsklaue (35) durch Ziehen am Seil (37) zu ermöglichen.

15. Käfig für Haustiere nach Anspruch 14, bei dem der Verriegelungsmechanismus einen Kippriegel (25) mit der Verriegelungsklaue (35) und einem Gegengewicht (27) aufweist, wobei der Kippriegel drehbar um eine Drehachse (36) angeordnet ist, wobei sich das Gegengewicht auf einer Seite der Achse (36) befindet und die Verriegelungsklaue sich auf der gegenüberliegenden Seite der Achse befindet.

16. Käfig für Haustiere nach Anspruch 15, wobei das Seil (37) an dem Gegengewicht (27) befestigt ist, um das Gegengewicht von der Basis (34) hochzuheben, indem an dem Seil gezogen wird, um **dadurch** die Verriegelungsklaue (35) an dem Beschlag (28) vorbei zu schwenken.

17. Käfig nach Anspruch 14, 15 oder 16, bei dem das Seil (37) durch ein Rohr (38) längs des Käfigs zu einer mittleren Verriegelungsvorrichtung geführt ist, von der aus der Kippriegel (25) aus einer Mittelstellung in Eingriff und außer Eingriff gebracht werden kann.

18. Käfig nach einem der Ansprüche 14-17, bei dem ein verlagerbarer Gleitblock (39) für die Verriegelung vorgesehen ist, wobei der Gleitblock (39) so beschaffen ist, dass er zwischen einer ersten Position und einer zweiten Position gleitet, wobei der Gleitblock (39) in der ersten Position das Seil ausreichend unterstützt, so dass ein Ziehen am Seil (37) eine Bewegung der Verriegelungsklaue (35) hervorruft, und wobei der Gleitblock (39) in der zweiten Position ein Durchhängen des Seils hervorruft, das ausreicht, dass ein Spannen des Seils durch die mittlere Verriegelungsvorrichtung keine Bewegung der Verriegelungsklaue in einem Ausmaß ermöglicht, dass der Beschlag (28) von dem Haken freigegeben werden kann.

## Revendications

1. Porte arrière prévue pour une cage (1) pour des animaux domestiques, de préférence des truies, la cage possédant une dimension de façon à ce qu'un de ces animaux puisse rester dans la cage, la porte arrière (4) étant articulée à l'horizontale et étant positionnée sur le train arrière de l'animal en condition ouverte, la porte arrière (4) étant munie d'une ouverture (9) entre des pièces latérales de support (10) de la porte arrière s'étendant en direction du bord extérieur (11) de la porte arrière, l'ouverture débouchant vers le haut et présentant une taille empêchant le passage de l'animal à travers l'ouverture mais permettant le passage d'un être humain par la porte arrière, dans laquelle la transition (12) des cotés (13) de l'ouverture vers les pièces latérales de support (10) fait un angle droit ou aigu et cet angle présente des bords francs, **caractérisée en ce que** la porte arrière est une porte arrière unitaire (4) et **en ce que** l'ouverture (9) est fermée vers le bas et la porte arrière (4) possède un mécanisme de déverrouillage (29, 30, 31, 32, 33) pour libérer la porte arrière (4) de la condition de fermeture, le mécanisme de déverrouillage étant prévu pour permettre la libération de la porte de la condition de fermeture par déplacement vers l'arrière de la porte arrière sur une longueur en direction arrière avant un pivotement vers le haut de la grille.

2. Porte arrière selon la revendication 1, dans laquelle la porte arrière (4) comprend un grillage avec une section centrale (21) et une section latérale (22) de chaque coté de la section centrale (21).

3. Porte arrière selon la revendication 1, dans laquelle la porte arrière (4) comprend un grillage avec une section centrale (21) et des sections latérales (22), les sections latérales (22) s'étendant plus loin en direction du fond (23) de la cage que la section centrale (21) lorsque la porte arrière (4) est fermée.

4. Porte arrière selon l'une quelconque des revendications précédentes, dans laquelle la transition (12) est constituée par les cotés (13) de l'ouverture (9) fixés sur le coté des pièces latérales de support (10) ou les pièces latérales de support (10) sont fixées sur les cotés (13) de l'ouverture.

5. Porte arrière selon la revendication 4, dans laquelle la grille (4) est constituée de tubes en fer et/ou de sections en fer et dans laquelle la transition (12) est prévue par soudure.

6. Porte arrière selon l'une quelconque des revendications 1 à 3, dans laquelle les cotés (13) de l'ouverture (9) et les pièces latérales de support (10) sont constitués par des tubes et la transition (12) est incurvée avec un rayon de courbure qui est inférieur à deux fois le diamètre du tube, de préférence inférieur à 1,5 fois le diamètre du tube.

7. Porte arrière selon l'une quelconque des revendications précédentes, dans laquelle la grille (4) comprend un raccord à déplacement élastique (28) pour un engagement derrière un crochet (29), le raccord (28) étant précontraint avec une force élastique fournie par un moyen élastique, le raccord étant prévu pour se libérer du crochet sous une force suffisamment grande appliquée à la porte dans une direction qui est dirigée fortement vers l'arrière par rapport à la cage (1) afin de contrer la force élastique.

8. Porte arrière selon la revendication 7, dans laquelle le moyen élastique est un mécanisme à ressort.

9. Porte arrière selon la revendication 8, dans laquelle le raccord (28) comprend un creux oblong (33) à travers lequel s'étend un axe rotatif (31), l'axe rotatif se déplaçant radialement dans le creux oblong (33).

10. Porte selon la revendication 9, dans laquelle le raccord (28) comprend un mécanisme à ressort actionnant le raccord par une force en direction radiale contre l'axe rotatif (31), la direction de la force contre l'axe rotatif étant tournée vers l'avant si la porte arrière (4) est en condition de fermeture.

11. Cage pour animaux domestiques avec une porte arrière selon l'une quelconque des revendications 1 à 10, dans laquelle la cage est du type à passage d'alimentation (2) à l'extrémité avant de la cage, une porte avant (3) qui est connectée à la porte arrière (4) par l'intermédiaire d'un dispositif de connexion (5) de façon à ce qu'une ouverture de la porte avant implique la fermeture de la porte arrière et une ouverture de la porte arrière implique une fermeture de la porte avant.

12. Cage pour animaux domestiques selon la revendication 11, dans laquelle la cage (1) comprend un mécanisme de blocage avec des moyens qui, lors d'un engagement, bloquent un déplacement de la porte arrière.

13. Cage pour animaux domestiques selon la revendication 12, dans laquelle la porte (4) comprend un raccord à déplacement élastique (28) pour un engagement derrière un crochet (29), le raccord (28) étant précontraint à l'aide d'une force élastique fournie par un moyen élastique, le raccord étant prévu pour se libérer du crochet sous une force suffisamment grande appliquée à la porte dans une direction qui est fortement vers l'arrière par rapport à la cage (1) afin de contrer la force élastique, le mécanisme de blocage comprenant un cliquet mobile (35) conçu, lors d'un engagement du mécanisme de blocage, pour être déplacé en butée contre le raccord (28) afin d'empêcher que le raccord (28) ne puisse être libéré du crochet (29).

14. Cage pour animaux domestiques selon la revendication 13, dans laquelle le mécanisme de blocage comprend un câble (37) connecté au cliquet de blocage (35) pour permettre un déplacement du cliquet de blocage (35) par traction du câble (37).

15. Cage pour animaux domestiques selon la revendication 14, dans laquelle le mécanisme de blocage comprend un verrou basculant (25) avec un cliquet (35) et un contre-poids (27), le verrou basculant étant prévu rotatif autour d'un axe de rotation (36) avec le contre-poids sur un coté de l'axe (36) et le cliquet sur le coté opposé de l'axe.

16. Cage pour animaux domestiques selon la revendication 15, dans laquelle le câble (37) est fixé sur le contre-poids (27) afin de le soulever de la base (34) par traction sur le câble, faisant ainsi pivoter le cliquet (35) devant le raccord (28).

17. Cage selon la revendication 14, 15 ou 16, dans laquelle le câble (37) traverse un tube (38) le long de la cage vers un dispositif central de blocage d'où le verrou basculant (25) peut être engagé et désengagé d'une position centrale.

18. Cage selon l'une quelconque des revendications 14 à 17, dans laquelle un bloc coulissant (39) pour un blocage est prévu, le bloc coulissant (39) étant conçu pour coulisser entre une première position et une seconde position, le bloc coulissant (39) supportant dans la première position le câble suffisamment pour qu'une traction du câble (37) provoque un déplacement du cliquet (35) et le bloc coulissant (39) provoquant dans la seconde position un relâchement du câble qui est suffisant afin qu'une tension du câble à partir du dispositif central de blocage ne puisse pas déplacer le cliquet à un degré tel que le raccord (28) puisse être libéré du crochet (29).
